# EUROPÄISCHE PATENTSCHRIFT

(11) **EP 2 209 218 B1**
(45) Veröffentlichungstag und Bekanntmachung des Hinweises auf die Patenterteilung: **26.07.2017**
(21) Anmeldenummer: 10150711.9
(22) Anmeldetag: 14.01.2010
(51) Int. Cl.: H04B 5/00

(54) **Drahtlose Anschlusseinrichtung für Dienstleistungsbereiche**
Wireless connection device for service areas
Dispositif de raccordement sans fil pour domaines de prestation de service

(30) Priorität: 15.01.2009 DE 102009005138
(43) Veröffentlichungstag der Anmeldung: 21.07.2010
(73) Patentinhaber: Wincor Nixdorf International GmbH, 33106 Paderborn (DE)
(72) Erfinder: Könighaus, Dirk, 33100 Paderborn (DE); Pollmann, Gregor, 33102 Paderborn (DE); Kruse, Bernd, 33184 Buke (DE)
(74) Vertreter: 2K Patentanwälte Blasberg Kewitz & Reichel

(56) Entgegenhaltungen:
- EP-A2- 0 869 630
- US-A- 6 061 234
- US-A1- 2006 065 714
- US-A1- 2007 117 589

## Beschreibung

Die Erfindung betrifft ein Möbel mit einer drahtlosen Anschlusseinrichtung nach dem Oberbegriff des Anspruchs 1. Insbesondere betrifft die Erfindung ein Möbel mit einer drahtlosen Anschlusseinrichtung für Dienstleistungsbereiche, wie z.B. Bankfilialen, um dort elektronische bzw. datenverarbeitende Geräte, wie z.B. Personal Computer, Drucker und dergleichen, kabellos an ein Datennetzwerk anzuschließen, wobei das Möbel zum Aufstellen der Geräte in Gestalt eines Schaltermöbels, Schreibtisches und dergleichen genutzt wird.

An sich bekannt sind drahtlose Anschlusseinrichtungen in Gestalt von Funkvorrichtungen für sog. drahtlose lokale Netzwerke (WLAN: Wireless Local Access Networks), bei denen mindestens eine mit dem Netzwerk verbundene Funkbasisstation, die auch als drahtloser Zugangsknoten (WLAN Access Node) bezeichnet wird, im Raum installiert ist. Die mindestens eine Funkbasisstation kann als Einrichtung zum drahtlosen Anschluss an das Datennetzwerk von solchen datenverarbeitenden Geräten genutzt werden, die über entsprechende WLAN-Funkmodule verfügen. Zur Funkübertragung wird üblicherweise ein Standard, z.B. nach IEEË-802.11, verwendet. Damit können derzeit bereits Datenübertragungsraten von 54 Mbit/s realisiert werden. Da die Funkbasisstationen als zentrale Zugangsknoten dienen, werden sie üblicherweise an exponierten Stellen im Raum installiert, um eine möglichst flächendeckende Funkversorgung zu erreichen. Das hat allerdings den Nachteil, dass die Funkbasisstationen ggf. ein größeres über den eigentlichen Raumbereich hinausgehendes Funkfeld ausprägen. Somit besteht die Gefahr, dass von Außen durch Einsatz fremder drahtloser Geräte unerlaubte Zugriffe auf das Datennetzwerk versucht werden können. Als Schutzmaßnahmen werden üblicherweise Sicherheitskodierungen (z.B. WPA) eingesetzt, die aber auch keine vollkommende Sicherung bieten können. Zudem bedeutet der Einsatz von mehreren Funkbasisstationen einen gewissen Installationsaufwand, insbesondere dann, wenn mehrere Räumlichkeiten versorgt werden sollen.

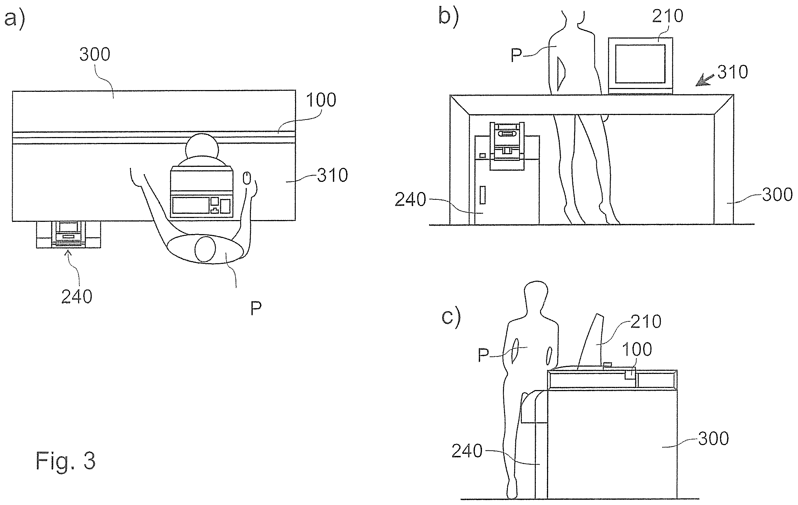

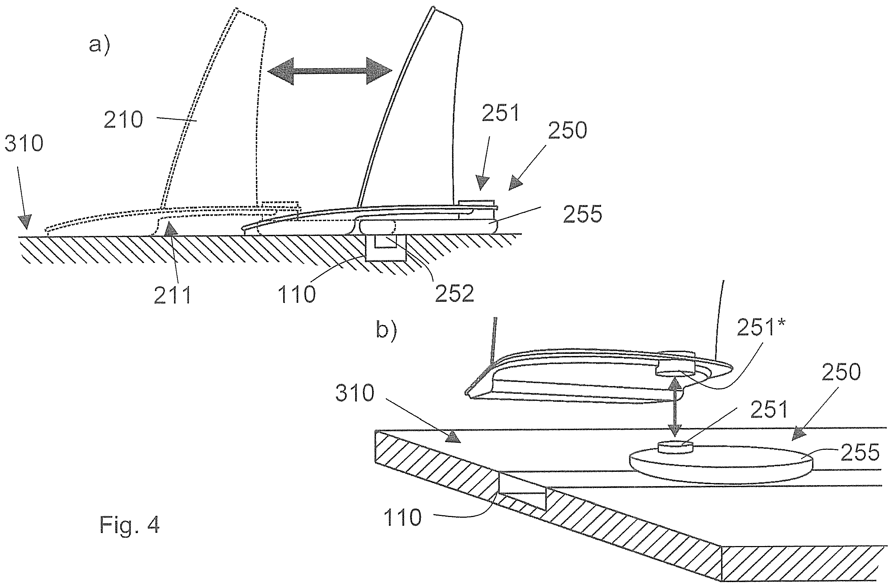

Aus der EP 0 869 630 A2 ist auch ein Möbel (siehe Abstract und Fig. 3) bekannt, das mit einer drahtlosen Anschlusseinrichtungen ausgestattet ist. Das Möbel weist zum Anschluss von mindestens einem datenverarbeitenden Gerät (wie z.B. Laptop 50) an ein Datennetzwerk eine drahtlose Anschlusseinrichtung auf, die ein Leckwellenkabel aufweist, das in dem Möbel integriert ist, wobei das Möbel eine für mindestens ein datenverarbeitendes Gerät vorgesehene Abstellfläche aufweist, in die das Leckwellenkabel integriert ist(siehe Fig. 4).

Aus der US 2007 / 117 589 A1 sind Möbel bekannt, die mit einer drahtlose Anschlusseinrichtungen ausgestattet ist (siehe Abstract und Fig. 11). Die Möbel sind als Schreibtische ausgeführt und weisen zum Anschluss von datenverarbeitenden Geräten an ein Datennetzwerk eine drahtlose Anschlusseinrichtung mit Leckwellenkabel auf.

Die drahtlosen Anschlusseinrichtungen haben den Vorteil, dass die datenverarbeitenden Geräte (z.B. Laptops) auf der Abstellfläche des Möbels frei bewegt werden können. Auch sind keine Steckverbindungen herzustellen, wie dies bei herkömmlichen drahtgebundenen Anschlusseinrichtungen erforderlich ist, die als sog. Docking-Stations ausgebildet sind. In der US 6061234 A wird eine solche Docking-Station offenbart.

Bei einem Möbel mit drahtloser Anschlusseinrichtung muss allerdings der Nutzer dafür Sorge tragen, dass die drahtlose Verbindung zwischen seinem Gerät (z.B. Laptop) und der drahtloser Anschlusseinrichtung für eine möglichst gute drahtlose Datenübertragung funktioniert.

In der DE 20 2005 006 060 U1 wird zur drahtlosen Funkversorgung von mehreren Räumlichkeiten eine Anordnung mit Leckwellenkabeln bzw. Leckwellenleitern vorgeschlagen. Dabei handelt es sich um speziell ausgebildete und mit Schlitzen versehene Kabel, die anstelle von Rundstrahlantennen eingesetzt werden können, wobei aber eine linienförmige Ausreitungscharakteristik ausgeprägt wird. In der genannten Schrift wird die WLAN-Versorgung von Fluren oder flurähnlichen Räumlichkeiten beschrieben und vorgeschlagen, im Gebäude mehrere Leckwellenkabel an den Decken zu installieren. Da die Installation sich an den Gegebenheiten des Gebäudes und der Räumlichkeiten orientiert, kann sie jedoch sehr aufwendig sein. Zudem müssen die an den Decken verlegten Leckwellenkabel mit einer ausreichenden Signalstärke betrieben werden, um sicherzustellen, dass alle Raumbereiche funktechnisch gut versorgt sind.

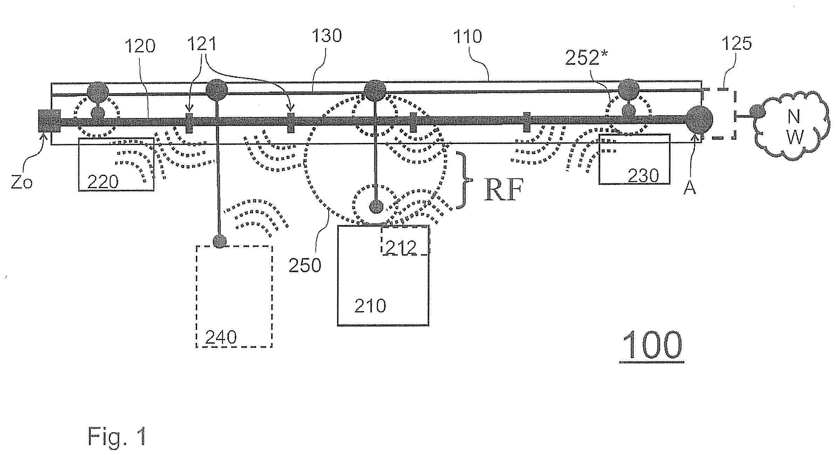

In der Patentschrift US 6,0061,234 wird eine Docking-Station für ein datentverabeitendes Gerät (Laptop) offenbart. Die Docking-Station stellt eine Ankopplungs-Einheit bzw. ein Zusatzgerät zum elektrischen Verbinden des Laptops mit Peripheriegeräten (s. Fig. 1 "Display") und Netzwerk dar.

In US 2006/0065714 A1 (s. Abstract "A passport reader") wird ein Lesegerät für Ausweisdokumente offenbart, die RFID-Elemente enthalten. Das Lesegerät weist eine abgewinkelte Fläche (s. in Fig. 3 den Winkel α sowie [0037]) auf, auf welcher das Ausweisdokument zum Auslesen so angelegt wird, dass das RFID Element (12) sich direkt an der Antenne (16) einer Abfrage-Einheit ("interrogation source 30") befindet.

Es ist Aufgabe der vorliegenden Erfindung, ein Möbel mit einer drahtlosen Anschlusseinrichtung der eingangs genannten Art so zu verbessern, dass die genannten Nachteile überwunden werden und eine Verbindung zwischen Möbel und datenverarbeitendem Gerät ermöglicht wird. Insbesondere soll ein Möbel mit einer Anschlusseinrichtung vorgeschlagen werden, das für eine sichere und effiziente drahtlose Anbindung mindestens eines datenverarbeitenden Gerätes an ein Datennetzwerk geeignet ist. Das Möbel mit der drahtlosen Anschlusseinrichtung soll für eine kabellose Anbindung von Geräten insbesondere in solchen Dienstleistungsbereichen geeignet sein, die von Kunden frequentiert werden, wie zum Beispiel in Bankfilialen, an Informationsschaltern, in Selbstbedienungsbereichen und dergleichen.

Gelöst wird die Aufgabe durch ein Möbel mit einer drahtlosen Anschlusseinrichtung mit den Merkmalen des Anspruchs 1.

Die Erfindung geht von einem Möbel mit einer drahtlosen Anschlusseinrichtung aus, die mindestens ein Leckwellenkabel aufweist, wobei das Leckwellenkabel in dem Möbel integriert ist, das für zumindest ein elektronisches bzw. datenverarbeitendes Gerät bereitgestellt ist. Das Leckwellenkabel ist in eine an dem Möbel vorgesehene Abstell- bzw. Arbeitsfläche integriert. Beispielsweise kann das Leckwellenkabel in einem in dem Möbel vorgesehenen Kabelkanal verlegt sein.

Das Möbel zeichnet sich dadurch aus, dass das Möbel mit mindestens einem mechanisch ausgebildeten Verbindungselement versehen ist, mit dem jeweils eines der datenverarbeitenden Geräte direkt oder über eine Verbindungsvorrichtung verbindbar ist, um dieses Gerät auf der Abstellfläche für eine über das Leckwellenkabel aufbaubare Funkverbindung zu positionieren.

Das erfindungsgemäße Möbel ist demnach mit mindestens einem mechanisch ausgebildeten Verbindungselement versehen, mit dem jeweils eines der datenverarbeitenden Geräte direkt über ein entsprechendes Verbindungselement oder über eine Verbindungsvorrichtung verbindbar ist, um dieses Gerät auf der Abstellfläche des Möbels für eine über das Leckwellenkabel geführte drahtlose Datenübertragung optimal zu positionieren. Vorzugsweise sind die Verbindungselemente zusammenfügbar bzw. zusammensteckbar ausgeführt. Die Verbindungselemente können für die Herstellung einer irreversiblen Steckverbindung ausgeführt sein, so dass das jeweilige datenverarbeitende Gerät in der optimalen Position einrastet und dort verbleibt. Die Verbindungsvorrichtung mit den daran vorgesehenen Verbindungselementen kann auch so ausgestaltet sein, dass sie eine in der Ebene der Abstell- bzw. Arbeitsfläche drehbare Verbindung herstellt, insbesondere eine Exzenter-Verbindung herstellt, so dass das Gerät in einem beschränkten Umfang bewegt werden kann, um z.B. für die Bedienung durch einen Kunden positioniert zu werden. Die an dem Möbel vorgesehenen Verbindungselemente sind vorzugsweise so angeordnet, dass das jeweils positionierte Gerät und insbesondere ein darin integrierte Funkmodul sich in der Nähe eines der Schlitze des Leckwellenkabels befinden.

Das erfindungsgemäße Möbel kann beispielsweise als Büromöbel, insbesondere als Schreibtisch, oder als Schaltermöbel, insbesondere als Schaltertresen, ausgebildet sein. Die hier vorgestellte Lösung eignet sich u.a. zum Einsatz in Bankfilialen und dergleichen und soll in diesem Zusammenhang nachfolgend auch kurz als "kabellose Filiale" bezeichnet werden.

Durch die erfindungsgemäße Merkmalskombination wird das datenverarbeitende Gerät optimal an dem Möbel selbst für eine drahtlose bzw. kabellose Anbindung positioniert. Das Leckwellenkabel ermöglicht dabei eine gezielte, vorzugsweise linienförmige, Ausprägung eines Funkfeldbereichs in unmittelbarer Umgebung des Möbels, insbesondere im Bereich der Abstellfläche bzw. Arbeitsfläche. Somit ist die Ausbreitung des Funkfeldbereichs auf die für die Geräte vorgesehenen Positionsbereiche beschränkt. Es können leistungsschwächere Funksendeverstärker eingesetzt werden. Zudem besteht quasi keine Möglichkeit, unerlaubt von Außen auf die Funkversorgung und Datenanbindung zuzugreifen. Weiterhin orientiert sich die Ausprägung der Funkversorgung an den Möbeln selbst und ist somit unabhängig von den Gegebenheiten der genutzten Räumlichkeiten. Das hat insbesondere Vorteile bei einer evtl. Umordung der Möbel oder gar bei einem Umzug in andere Räumlichkeiten. Die mit der Anschlusseinrichtung versehenen Möbel stellen ein modulares System dar, das leicht modifiziert und erweitert werden kann.

Um eine definierte Ausbreitung der Funkwellen zu erreichen, kann das Leckwellenkabel hinsichtlich seiner Anordnung und/oder Ausgestaltung, insbesondere hinsichtlich der Dimensionierung seiner Schlitze, auf eine den Nahbereich beschränkte Funkverbindung hin optimiert werden. Beispielsweise kann dies durch Gestaltung der Schlitzöffnungen und/oder ihrer Abstände erreicht werden. In diesem Zusammenhang ist es vorteilhaft, wenn die Anordnung, Dimensionierung und/oder Ausgestaltung der Schlitze auf die Schaffung mehrerer sich auf der Abstellfläche des Möbels ausbildender kleinster Funkzonen ausgerichtet ist, die eine Ausdehnung von nur einigen Zentimetern, etwa 25 cm, aufweisen.

An einem ersten Ende des Leckwellenkabels kann eine Anschlusseinheit vorgesehen sein, um das Leckwellenkabel mit dem Datennetzwerk zu verbinden. In diesem Zusammenhang kann auch vorgesehen sein, dass die Anschlusseinheit ebenfalls geeignet ist, ein in dem Möbel verlegtes Stromversorgungskabel mit einem Stromversorgungsnetz zu verbinden. Alternativ zum Stromversorgungskabel kann die Stromversorgung auch drahtlos über das Leckwellenkabel selbst erfolgen oder kann über ein zusätzlich verlegtes Kabel in Form eines Induktionsleiters oder eines weiteren Leckwellenkabels erfolgen.

An einem zweiten Ende des Leckwellenkabels ist vorzugsweise ein Abschlusselement vorgesehen, das einen definierten wellenwiderstand aufweist, um das Leckwellenkabel reflektionsfrei abzuschließen.

Die genannten Vorteile und weitere ergeben sich auch aus den Unteransprüchen.

Nachfolgend wird die Erfindung im Detail anhand von Ausführungsbeispielen beschrieben, wobei auf die beiliegenden Zeichnungen Bezug genommen wird, die folgende schematische Darstellungen wiedergeben:
- Fig. 1: zeigt die Grundstruktur einer drahtlosen Anschlusseinrichtung mit Leckwellenkabel, das in einem Kabelkanal eines Möbels integriert ist.
- Fig. 2: zeigt in einem Detail den Aufbau eines Leckwellenkabels und veranschaulicht die sich daran ausbildenden elektromagnetischen Funkwellen.
- Fig. 3 a)-c): zeigen in verschiedenen Ansichten ein erfindungsgemäßes Möbel mit darauf bzw. daran positionierten datenverarbeitenden Geräten.
- Fig. 4 a)-b): zeigen in verschiedenen Ansichten ein datenverarbeitendes Gerät mit einer daran vorgesehenen Verbindungsvorrichtung.
- Fig. 5 a)-b): zeigen in weiteren Ansichten das datenverarbeitende Gerät mit der erfindungsgemäßen Verbindungsvorrichtung.
- Fig. 6 a)-b): zeigen in verschiedenen Ansichten den Aufbau eines Kabelkanals mit darin integriertem Verbindungselement.
- Fig. 7 a)-b): zeigen in verschiedenen Ansichten die Funktion und Aufbau einer hergestellten Exzenter-Verbindung.

In Fig. 1 ist in schematischer Darstellung eine erfindungsgemäße drahtlose Anschlusseinrichtung 100 dargestellt, die den drahtlosen Anschluss von mehreren elektronischen, insbesondere datenverarbeitenden, Geräten 210, 220, 230 und 240 an ein Datennetzwerk NW ermöglicht. Die Anschlusseinrichtung 100 weist dazu insbesondere ein Leckwellenkabel 120 auf, das in einem Möbel (siehe Fig. 3) integriert ist. In dem hier dargestellten Beispiel ist das Leckwellenkabel 120 zusammen mit einem Stromversorgungskabel 130 in einem Kabelkanal 110 aufgenommen, der in dem Möbel integriert ist. Das Stromversorgungskabel 130 ist mit einem nicht dargestellten Stromversorgungsnetz verbunden und stellt über mehrere Anschlusspunkte, die auch mechanische Verbindungselemente 252* aufweisen, eine Stromversorgung der angeschlossenen Geräte bereit, hier z.B. der Geräte 210 und 240, bereit.

Zur eigentlichen Datenübertragung durch eine drahtlose Funkanbindung dient das Leckwellenkabel 120, welches in regelmäßigen Abständen Schlitze 121 aufweist. Über die Schlitze 121 erfolgt die Ausprägung von kleinsten Funkzonen mit einer Ausdehnung von z.B. 25cm, um im nahen Umfeld des Möbels, zumindest aber in der Nähe des Kabelkanals 110, eine ausreichende und sichere drahtlose Anbindung durch Funkübertragung RF für die datenverarbeitenden Geräte 210 bis 240 bereitzustellen.

Die hier dargestellten Geräte 210 bis 240 können beispielsweise folgende sein:
Das Gerät 210 soll hier ein Personal Computer (PC) bzw. ein Datenterminal sein, das für den Kundenservice in einer Bankfiliale eingerichtet und aufgestellt ist. Bei dem Gerät 220 handelt es sich beispielsweise um ein Peripheriegerät in Gestalt eines Druckers und bei dem Gerät 230 um ein Peripheriegerät in Form eines Scanners. Das Gerät 240 stellt ein spezielles Peripheriegerät dar, nämlich einen automatischen Kassentresor, der ebenfalls drahtlos über das Leckwellenkabel 120 mit dem Datennetzwerk NW verbunden ist.

Alle Geräte können somit über die jeweilige Funkverbindung RF Daten mit dem Netzwerk NW oder ggf. auch direkt untereinander austauschen. In dem hier beschriebenen Anwendungsbeispiel einer Bankfiliale kann der Bankkunde sich über den PC bzw. das Datenterminal 210 in das Datennetzwerk NW unter seinem Nutzerkonto einloggen und beispielsweise den Vorgang "Kontoauszug drucken" veranlassen, um über den Drucker 220 einen Kontoauszug zu erhalten. Ein anderer Vorgang kann z.B. die Auszahlung von Bargeld betreffen, so dass der Kunde schließlich über den automatischen Kassentresor 240 das gewünschte Bargeld ausgehändigt bekommt.

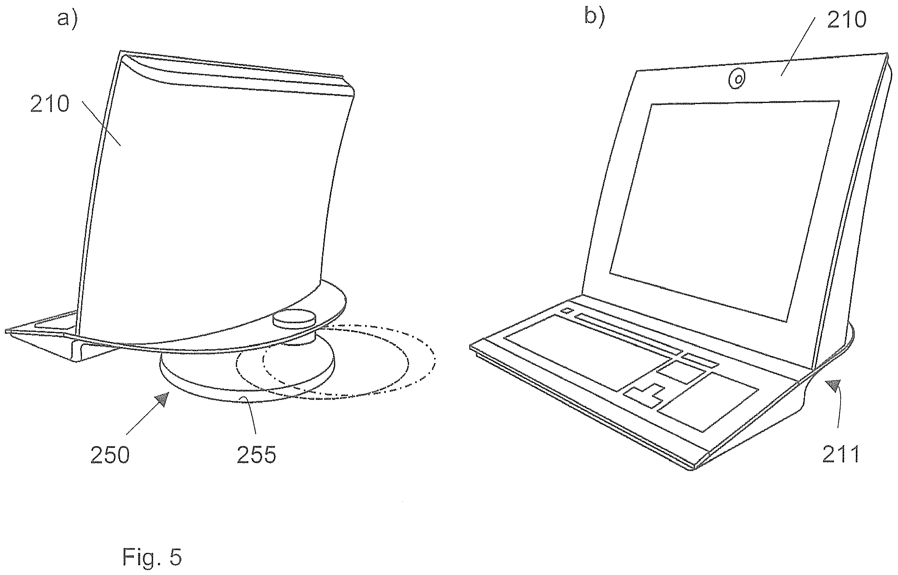

Um für eine funktechnisch optimale Positionierung der Geräte zu sorgen, sind an den Möbel Verbindungselemente 252* vorgesehen, die mit entsprechenden Verbindungselementen 215 zusammenwirken, welche sich an den Geräten selbst befinden. Am Beispiel des Gerätes 210, das einen PC darstellt, ist zu erkennen, dass dieser über die Verbindungsvorrichtung 250 und entsprechende Verbindungselemente 251, 252 usw. (siehe auch Fig. 4 und 5) so positioniert ist, dass ein in dem PC 210 integriertes Funkmodul 212 optimal zum nächstliegenden Schlitz 121 des Leckwellenkabels 120 hin ausgerichtet ist.

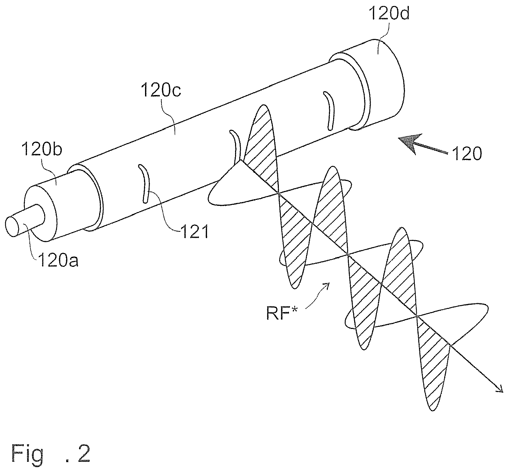

Wie anhand der Fig. 1 veranschaulichend dargestellt ist, werden entlang des Leckwellenkabels 110 an den jeweiligen beabstandeten Schlitzen 121 kleine Funkversorgungsbereiche für das jeweils in der Nähe des Schlitzes 121 befindliche Gerät ausgebildet. Durch Anpassung der eingespeisten Sendeleistung, der Anordnung und/oder der Dimensionierung des Leckwellenkabels kann ein optimaler Abstrahlungsbereich mit definierter Begrenzung auf beispielsweise 25cm erreicht werden. Das Funkfeld tritt jeweils nur an den Schlitzöffnungen auf und hat eine relativ geringe Streuung (s. auch Fig. 2). Somit ist sichergestellt, dass die Funkversorgung nicht über den notwendigen Bereich hinaus ausgedehnt und zugänglich für unerlaubte Zugriffen von außen ist.

Die hier vorgeschlagene mit einem Leckwellenkabel 120 versehene und in einem Möbel integrierte Anschlusseinrichtung 100 eignet sich besonders zum Einsatz in Dienstleistungsbereichen bzw. -zentren, wie z.B. in Kunden- bzw. Schalterbereichen von Banken. Die drahtlose Anbindung von mehreren Geräten an das dortige Datennetzwerk ermöglicht den schnellen Aufbau und ggf. die Umordnung der Anordnung. Durch die Integration des Leckwellenkabels 120 in die vorgesehenen Möbel ist eine auf den Arbeitsbereich hin optimierte Funkanbindung gewährleistet. Das gilt sowohl hinsichtlich der Qualität (Übertragungsrate, Sicherheit usw.) wie auch hinsichtlich der Quantität (Datenübertragungsrate, Energieeffizienz usw.) der Funkübertragung.

In dem hier dargestellten Beispiel erfolgt die Funkübertragung entsprechend einem WLAN-Standard im 2,4 GHz Bereich. Dadurch sind hohe Übertragungsraten erzielbar. Das Leckwellenkabel selbst weist an einem Ende einen Anschlusspunkt A auf, der sich an oder in einer Anschlusseinheit 125 befindet, welche wiederum die Verbindung zum Datennetzwerk NW herstellt. Bei dieser Anschlusseinheit 125 kann es sich beispielsweise um einen sog. Access Point handeln, d.h. um ein WLAN-Modem bzw. -Router mit Funkteil, das eine Auschlussmöglichkeit für das Leckwellenkabel 110 enthält. Das WLAN-Modem ist auf der anderen Seite über einen Ethernet-Anschluss mit dem Datennetzwerk NW verbunden.

Die Anschlusseinheit 125 bildet also hinsichtlich der Nachrichtenübertragung das Bindeglied zwischen Datennetzwerk NW und Leckwellenkabel 110. An dem anderen Ende des Leckwellenkabels befindet sich ein Abschlusselement Z0 in Form eines Wellenwiderstandes, der das Leckwellenkabel reflektionsfrei abschließt.

Es ist denkbar, die Anschlusseinheit auch noch für die Energie- bzw. Stromversorgung zu erweitern, um beispielsweise das Stromversorgungskabel 130 mit dem hier nicht dargestellten Stromversorgungsnetz zu verbinden. Auch könnte die Anschlusseinheit eine Vorrichtung (HF-Generator) aufweisen, die das Leckwellenkabel 110 für eine drahtlose Energie-Übertragung anregt. Gleiches gilt für ein zusätzliches Leckwellenkabel oder für einen Induktionsleiter. In dem hier gezeigten Beispiel dient das Leckwellenkabel 120 ausschließlich der drahtlosen Datenübertragung.

Die Fig. 2 zeigt in einer schematischen Ansicht den strukturellen Aufbau des Leckwellenkabels 120 sowie die sich daran ausprägenden Funkwellen. Das Leckwellenkabel 120 besteht im Wesentlichen aus einem Innenleiter 120a, einem Außenleiter 120c und einem dazwischen befindlichen Dielektrikum 120b. Somit entspricht der Aufbau des Leckwellenkabels dem Aufbau eines Koexialkabels mit dem Unterschied, dass im Außenleiter 120c in vordefinierten Abständen Schlitze 121 vorgesehen sind. Durch die Schlitzöffnungen wird bei Anschluss des Leckwellenkabels 120 an ein Funksendeteil eine Wellenausbreitung FR* für eine Funkverbindung RF erzeugt, die hier in Fig. 2 beispielhaft dargestellt ist. Neben der Einstellung der eingespeisten Signalstärke kann durch die Anordnung der Schlitze 121 und/oder deren Dimensionierung die Wellenausbreitung auf den jeweils vorgesehenen Frequenzbereich hin (hier 2,4 GHz) optimiert werden. Das gilt insbesondere für die Ausdehnung der jeweiligen Funkzone, so dass erreicht werden kann, dass sich nur im Nahbereich von beispielsweise 25cm ein ausreichend großes Funkfeld ausbreitet. Dasselbe gilt auch in Empfangsrichtung, wobei die über das Leckwellenkabel 120 empfangenen Funksignale von entsprechenden Funkmodulen der jeweils aufgestellten Geräte ausgehen (s. "212" in Fig. 1). Die Funkmodule können auch als externe Funkmodule, beispielsweise in Form von USB-Sticks, ausgebildet sein, die an PCs bzw. Laptops und dergleichen angeschlossen werden.

Durch die erfindungsgemäße Integration eines Leckwellenkabels in das Möbel selbst (siehe auch Figuren 3, 6 und 7), können punktuell sich ausbildende Funkversorgungsbereich ausgebildet und linienförmig aneinandergereiht werden. Diese Struktur eignet sich insbesondere zum Einsatz in Schreibtischen und/oder Schaltermöbeln, so dass dort mehrere datenverarbeitende Geräte gleichzeitig und ohne Verkabelungsaufwand mit einem Datennetzwerk verbunden werden können.

Die Fig. 3 zeigt in Ansichten a), b) und c) ein erfindungsgemäßes Möbel 300 in Form eines Schreibtisches, der eine Abstellfläche 310 für Geräte, hier beispielsweise für den PC 210, aufweist. In dem Möbel 300 ist die drahtlose Anschlusseinrichtung 110 einschließlich des Leckwellenkabels integriert. Dadurch können die sich auf der Abstell- bzw. Arbeitsfläche 310 befindlichen Geräte (PC 210) und ggf. auch weitere sich in unmittelbarer Nähe befindliche Geräte (automatischer Kassentresor 240) drahtlos mit dem Datennetzwerk verbunden werden. Durch die später noch näher beschriebenen Anschlusselemente ist sichergestellt, dass sich zumindest die auf der Abstellfläche 310 befindlichen Geräte in einer optimalen Position zum Leckwellenkabel befinden. Die Person P, hier ein Bankkunde, kann durch eine drehbewegliche Ausgestaltung der Verbindungsvorrichtung 250, die als Exzenter-Verbindung wirkt und an dem Möbel in dem Kabelkanal linear verschieblich angeordnet ist, die Position des jeweiligen Geräts noch etwas verändern. Das Gerät selbst aber bleibt an dem vorgesehenen Platz befestigt. Ein Entfernen bzw. Diebstahl des Gerätes ist nicht oder nur unter Gewaltanwendung möglich.

Die Fig. 4 und 5 veranschaulichen in verschiedenen Darstellungen die hierzu vorgeschlagene Verbindungstechnik. In Fig. 4 a) und b) ist das datenverarbeitende Gerät 210, das hier ein sog. All-In-One PC ist, in verschiedenen Ansichten darstellt, wobei auf der unteren Gehäuseseite des Gerätes 210 ein Verbindungsteil 251* zu der Verbindungsvorrichtung 250 vorgesehen sind, die eine in der Ebene bewegliche Verbindung zur flexiblen aber dennoch genauen Positionierung des Gerätes 210 in unmittelbarer Nähe zu dem Leckwellenkabel hin ausbildet (s. auch Fig. 3). Die hier dargestellte Verbindungsvorrichtung 250 weist ein Plattformelement 255 und daran angeordnete Verbindungsteile bzw. -elemente auf, die zur Herstellung einer drehbeweglichen Verbindung ineinander gesteckt werden, wobei die Teile bzw. Elemente so ausgestaltet sind, dass eine Exzenter-Verbindung hergestellt wird, die ein horizontales Verschwenken bzw. Drehen sowie Verschieben des Gerätes 210 auf der Arbeitsfläche innerhalb eines vordefinierten Bereiches ermöglicht (s. auch Fig. 5). Somit kann der Benutzer bzw. Kunde das Gerät 210 in einem gewissen Umfang für sich positionieren, ohne dass das Gerät zu weit von dem Leckwellenkabel entfernt werden kann.

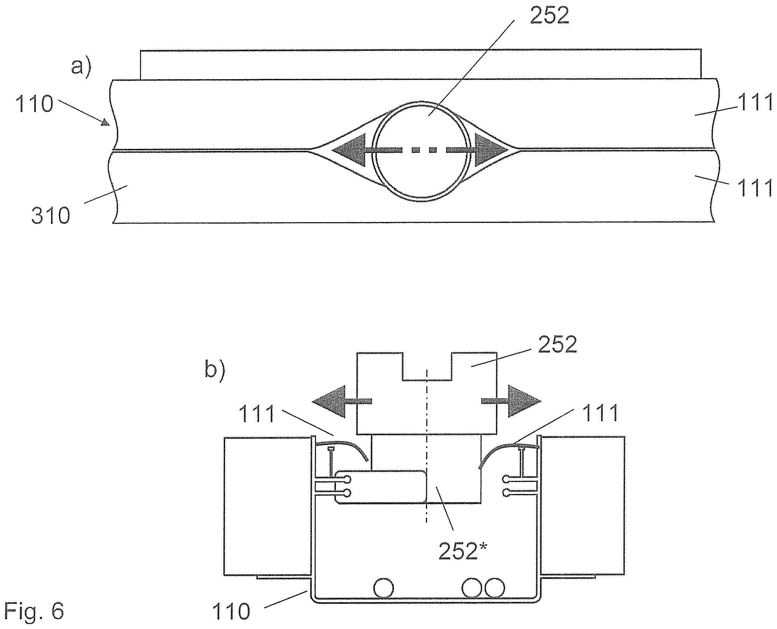

Die Fig. 6 zeigt in zwei Ansichten a) und b) die Ausgestaltung eines erfindungsgemäßen Kabelkanals 110, der vollständig in die Arbeitsfläche bzw. Abstellfläche 310 des Möbels integriert ist. Im Kabelkanal 110 befindet sich in vordefinierten Abständen jeweils ein Anschluss- bzw. Verbindungselement 252*, das ggf. entlang des Kabelkanals über eine entsprechende Führung (Führungsschienen oder - nuten) verschiebbar angeordnet ist. Der Kabelkanal 110 weist an seinen oberen Enden jeweils zwei gegenüber liegende elastische Kunststoffelemente, z.B. Gummilippen 111, auf. Das Anschlusselement 252* wiederum ist zumindest mit dem Stromversorgungskabel (s. auch Fig. 1) verbunden, so dass das jeweilige über den Anschlusspunkt 252* positionierte Gerät mit Strom versorgt werden kann. Bei der Stromversorgung kann es sich um eine herkömmliche Wechselspannung von 220V und 50Hz handeln, es kann aber auch eine Niedervolt-Gleichstromversorgung oder ähnliches vorgesehen sein. Wie insbesondere die Fig. 6b) darstellt, ist der Kabelkanal 110 zusammen mit dem darin verlegten Leckwellenkabel sowie weiteren vorgesehenen Anschluss- und Versorgungselementen vollständig in der Arbeitsfläche 310 des Möbels integriert.

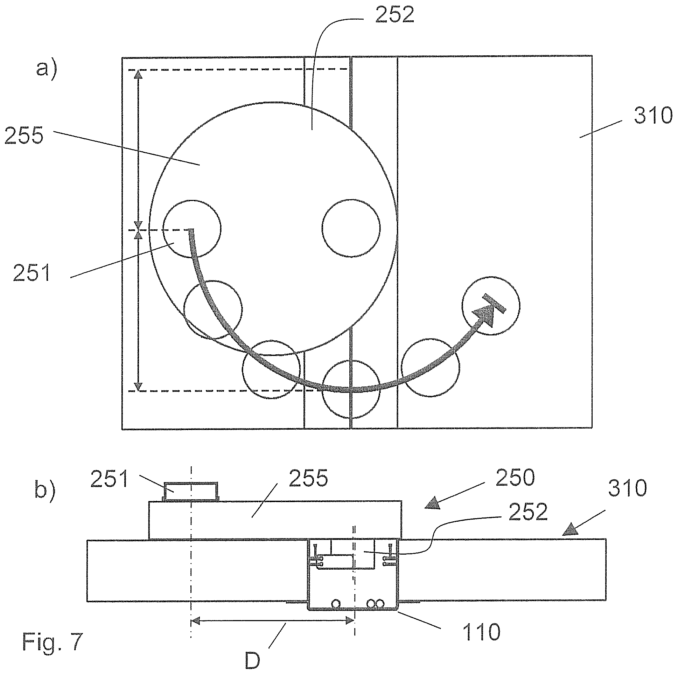

Die Fig. 7a) und b) zeigen in weiteren Ansichten die in oder an dem Kabelkanal fixierte Verbindungsvorrichtung 250 im zusammengesetzten Zustand und verdeutlichen seine Funktionsweise. Da die Verbindungsvorrichtung 250 als Exzenter ausgebildet ist, kann das jeweilige Gerät um einen Drehpunkt herum, der sich an dem Verbindungselement 252* festmacht, in der horizontalen Ebene verschwenkt werden. Somit kann das Gerät in einem definierten Bereich verschiedene Positionen einnehmen (s. auch Fig. 4a) und 5a)), wobei jedoch das Gerät sich immer in unmittelbarer Nähe des Leckwellenkabels befindet und somit immer eine sichere und zuverlässige Funkverbindung bestehen bleibt.

Die hier vorgestellte Erfindung ist unter anderem zum Einsatz in Schalterbereichen geeignet wie sie beispielsweise in Bank- oder Postfilialen anzutreffen sind. Durch die Erfindung kann eine sehr flexible Infrastruktur für eine kabellose Datenübertragung für Geräte bzw. Komponenten im Schalterbereich realisiert werden. Das in den Möbeln (z.B. Schaltertresen) integrierte Leckwellenkabel ist über eine entsprechende Anschlusseinrichtung mit dem Datennetzwerk verbindbar und dient dabei der drahtlosen Datenübertragung zwischen den Geräten und dem Datennetzwerk. Gleichfalls kann das Leckwellenkabel auch zur Energieversorgung einzelner Komponenten vorgesehen sein.

Als Komponenten bzw. Geräte sind insbesondere Personal Computer, Tastaturen, Drucker, Scanner, Monitore, Kartenleser und dergleichen zu nennen. Auch spezifische für die jeweilige Anwendung vorgesehene Peripheriegeräte, wie beispielsweise automatische Kassentresore, können integriert werden. Durch die Anordnung, Dimensionieren und/oder Ausgestaltung des Leckwellenkabels wird der Funkbereich auf das engere Umfeld des Möbels beschränkt. Somit wird eine Schaffung von definierten Sende-/Empfangszonen im Nahbereich des Möbels, insbesondere an der Arbeitsfläche, erzielt.

Die Erfindung eignet sich insbesondere zum Einsatz in Selbstbedienungsbereichen von Banken und dergleichen und kann zur Ausführung folgender Funktionen dienen: Einzahlung bzw. Auszahlung und darüberhinaus Recycling von Banknoten, Münzverarbeitung (Eingabe, Ausgabe, Zählen), Zugriff auf Sparbuch und andere Kontodienste, Beratungsdienste, wie beispielsweise Vertragsabschluß, Informationsdienste einschließlich Kundenidentifizierung über Karte und/oder Unterschrift, Ausgabe von Überweisungsformularen, Schecks und dergleichen. Die erfindungsgemäße Lösung ermöglicht somit einen sehr flexiblen Aufbau einer Infrastruktur. Durch Integration des Leckwellenkabels in das Möbel stellt sich der Arbeitsplatz bzw. Beraterplatz jeweils sehr aufgeräumt dar. Es besteht insbesondere die Möglichkeit zur kabellosen bzw. drahtlosen Anbindung von sogenannten All-In-One-PCs und von Peripherie-Komponenten, wobei neben der drahtlosen Datenübertragung auch noch eine Spannungsversorgung bereitgestellt werden kann. Durch den Einsatz eines Leckwellenkabels entsteht eine sehr klar definierte und gerichtete WLAN-Anbindung, die gegen äußere Angriffe geschützt ist. Neben dem Leckwellenkabel kann auch eine Stromleitung bzw. Stromschiene zur Energieversorgung bereitgestellt werden. Die erfindungsgemäße Lösung ermöglicht auch eine Anbindung mehrerer Möbel untereinander, wobei die drahtlosen Anschlusseinrichtungen beispielsweise als Daten-Hub ausgebildet sein können. Durch die definierte Ausprägung der Funkfeldbereiche ist nicht nur eine Reduzierung der benötigten Energie möglich, sondern wird auch eine Verringerung des EMV-Problems gelöst.

Die mechanische Verbindung zwischen den Geräten und dem Möbel selbst erfolgt vorzugsweise über eine Verbindungsvorrichtung in Form eines Drehtellers oder dergleichen. Bei Einsatz in öffentlichen Kundenbereichen werden die Verbindungselemente vorzugsweise als nicht lösbare Steckverbindungen ausgeführt. Dadurch kann der Kunde zwar das Gerät in einem gewissen Bereich bewegen bzw. verschwenken, das Gerät selbst kann jedoch nicht von dem Arbeitsplatz entfernt werden.

Insgesamt stellt sich die Erfindung als hochintegrative und sehr flexible sowie komfortable Infrastruktur dar. **Bezugszeichenliste**
- 100: drahtlose Anschlusseinrichtung
- 110: Kabelkanal
- 120: Leckwellenkabel mit:
120a Innenleiter, 120b Dielektrikum,
120c Außenleiter, 120c Kabelmantel, 121 Schlitzen
- 125: Anschlusseinheit zum Datennetzwerk (und ggf. auch zum Stromversorgungsnetz)
- 130: Stromversorgungskabel

- NW: Datennetzwerk
- RF: Funkverbindung (in engen Funkfeldbereichen)
- RF*: Wellenausbreitung am Leckwellenkabel
- A: Anschlusspunkt (zum Datennetzwerk)
- Z0: Abschlusswiderstand

- 210: erstes datenverarbeitendes Gerät, hier als PC ausgebildet, u.a. mit: 212 Funkmodul (WLAN-Modul)
- 220: zweites datenverarbeitendes Gerät bzw. Peripheriegerät, hier als Drucker ausgebildet
- 230: drittes datenverarbeitendes Gerät bzw. Peripheriegerät, hier als Scanner ausgebildet
- 240: viertes datenverarbeitendes Gerät bzw. Peripheriegerät, hier als autom. Kassentresor ausgebildet

- 250: Verbindungsvorrichtung (Exzenter) zwischen Gerät und Möbel mit 255 Plattformelement (Drehteller)
- 251, 252: Verbindungselemente (zueinander beabstandet)
- 251*: Verbindungselement (am Gerät)
- 252*: Verbindungselement (am Möbel)
- 300: Möbel, hier als Schaltertresen z.B. für Bankfiliale ausgebildet
- 310: Arbeitsfläche bzw. Abstellfläche für datenverarbeitende Geräte
- P: Person, hier z.B. Kunde einer Bank

## Patentansprüche

1. Möbel (300) zum Einsatz in Dienstleistungsbereichen für mindestens ein datenverarbeitendes Gerät (210, 220, 230, 240), wobei das Möbel (300) zum Anschluss des mindestens einen datenverarbeitenden Gerätes (210, 220, 230, 240) an ein Datennetzwerk (NW) eine drahtlose Anschlusseinrichtung (100) umfasst, die ein Leckwellenkabel (110) aufweist, das in dem Möbel (300) integriert ist und wobei das Möbel (300) eine für mindestens ein datenverarbeitendes Gerät (210, 220, 230) vorgesehene Abstellfläche (310) aufweist, in die das Leckwellenkabel (120) integriert ist,
**dadurch gekennzeichnet, dass** das Möbel (300) mit mindestens einem mechanisch ausgebildeten Verbindungselement (252*) für die Herstellung einer irreversiblen Steckverbindung versehen ist, mit dem jeweils eines der datenverarbeitenden Geräte (210, 220, 230) direkt oder über eine Verbindungsvorrichtung (250) verbindbar ist, um dieses Gerät (210) auf der Abstellfläche (310) für eine über das Leckwellenkabel (120) aufbaubare Funkverbindung (RF) in einer optimalen Position einrastend zu positionieren.

2. Möbel (300) nach Anspruch 1, **dadurch gekennzeichnet, dass** das Möbel (300) einen Kabelkanal (110) aufweist, in dem das Leckwellenkabel verlegt ist, insbesondere zusammen mit mindestens einem Stromversorgungskabel (130), verlegt ist.

3. Möbel (300) nach Anspruch 1 oder 2, **dadurch gekennzeichnet, dass** das Möbel (300) einen Kabelkanal (110) aufweist, in dem das Leckwellenkabel (120) zusammen mit einem weiteren Kabel, insbesondere Leckwellenkabel oder Induktionsleiterkabel, verlegt ist, das für eine drahtlose Energie-Übertragung an das mindestens eine datenverarbeitende Gerät (210, 220, 230, 240) ausgebildet ist.

4. Möbel (300) nach einem der Ansprüche 1 bis 4, **dadurch gekennzeichnet, dass** an dem Möbel (300) und einem Ende des Leckwellenkabels (120) eine Anschlusseinheit (125) vorgesehen ist, um das Leckwellenkabel (120) mit dem Datennetzwerk (NW) zu verbinden.

5. Möbel (300) nach Anspruch 1, **dadurch gekennzeichnet, dass** das Leckwellenkabel (120) Schlitze (121) zur Abstrahlung elektromagnetischer Wellen (RF) aufweist und dass das mindestens eine Verbindungselement (252*) an dem Möbel (300) so angeordnet sind, dass das jeweils positionierte Gerät (210) und insbesondere ein darin integriertes Funkmodul (212) sich in der Nähe eines der Schlitze (121) befindet.

6. Möbel (300) nach einem der Ansprüche 1 bis 5, **dadurch gekennzeichnet, dass** das Möbel (300) als Büromöbel, insbesondere als Schreibtisch, oder als Schaltermöbel, insbesondere als Schaltertresen, ausgebildet ist.

## Claims

1. A furniture (300) for use in service areas for at least one data processing device (210, 220, 230, 240), wherein the furniture (300) for connecting the at least one data processing device (210, 220, 230, 240) to a data network (300) comprises a wireless connecting equipment (100) having a leaky cable (110) being integrated in the furniture (300), and wherein the furniture (300) comprises a work surface (310) in which the leaky cable (120) is integrated,
**characterized in that** the furniture (300) is provided with at least one mechanically designed connecting element (252*) for establishing an irreversible plug connection, by means of which one of the data processing devices (210, 220, 230) is directly or via a connecting mechanism (250) connectable to put this device (210) on the work surface (310) in an optimum position and locking in place for a wireless connection (RF) being installed over the leaky cable (120).

2. The furniture according to claim 1, **characterized in that** the furniture (300) comprises a cable duct (110) in which the leaky cable is laid, in particular together with at least one power supply cable.

3. The furniture according to claim 1 or 2, **characterized in that** the furniture (300) comprises a cable duct (110) in which the leaky cable (120) is laid together with another cable, in particular a leaky cable or induction conductor cable which is designed for a wireless energy transmission to the at least one data processing device (210, 220, 230, 240).

4. The furniture as claimed in claim 1 to 4, **characterized in that** at the furniture (300) and at an end of the leaky cable there is provided a connecting unit (125) to connect the leaky cable (120) with the data network (NW).

5. The furniture (300) as claimed in claim 1, **characterized in that** the leaky cable (120) comprises slots (121) for radiating electromagnetic waves (RF), and that the at least one connecting element (252*) is arranged on the furniture (300) such that the respective positioned device (210) and in particular a wireless module (212) integrated therein are located in the vicinity of one of the slots (121).

6. The furniture as claimed in one of the claims 1 to 5, **characterized in that** the furniture (300) is designed as an office furniture, in particular as a desk, or as a counter area furniture, in particular as a counter.

## Revendications

1. Un meuble (300) pour une utilisation dans des zones de service pour au moins un dispositif de traitement de données (210, 220, 230, 240), dans lequel le meuble (300) pour la connexion du ou des dispositif(s) de traitement de données (210, 220, 230, 240) à un réseau de données (300) comporte un équipement de connexion sans fil (100) ayant un câble de fuite (110) intégré au sein du meuble (300), et dans lequel le meuble (300) comporte une surface de travail (310) au sein de laquelle est intégré le câble de fuite (120).
**caractérisé en ce que** le meuble (300) est disposé avec au moins un élément de connexion conçu mécaniquement (252*) pour établir une connexion de branchement irréversible, au moyen de laquelle l'un des dispositifs de traitement de données (210, 220, 230) est connectable, directement ou via un mécanisme de connexion, pour mettre ce dispositif (210) sur la surface de travail (310) dans une position optimale et pour un verrouillage en pace pour une connexion sans file (RF) installée sur le câble de fuite (120).

2. Le meuble selon la revendication 1, **caractérisé en ce que** le meuble (300 comporte un conduit de câble (110) dans lequel est inséré le câble de fuite, en particulier en même temps qu'une câble d'alimentation électrique au moins.

3. Le meuble selon la revendication 1 or 2, **caractérisé en ce que** le meuble (300 comporte un conduit de câble dans lequel le câble de fuite (120) est inséré avec un autre câble, en particulier un câble de fuite ou un câble de connecteur à induction qui est conçu pour une transmission d'énergie sans fil vers le ou les dispositif(s) de traitement de données (210, 220, 230, 240).

4. Le meuble tel que revendiqué dans les revendications 1 à 4, **caractérisé en ce que** l'on dispose, au niveau du meuble (300) et à une extrémité du câble de fuite, une unité de connexion (125) pour connecter le câble de fuite (120) au réseau de données (NW).

5. Le meuble (300) tel que revendiqué dans la revendication 1, **caractérisé en ce que** le câble de fuite (120) comporte des orifices (121) pour la radiation d'ondes électromagnétiques (RF), et **en ce que** le ou les élément(s) de connexion (252*) est/son disposé(s) sur le meuble (300) de telle manière que le dispositif respectivement positionné (210) et en particulier un module sans fil (212) y intégré soit situé proche de l'un des orifices (121).

6. Le meuble tel que revendiqué dans l'une des revendications 1 à 5, **caractérisé en ce que** le meuble (300) est conçu sous la forme d'un mobilier de bureau, en particulier un bureau, ou un meuble de comptoir, en particulier un comptoir.
